# EUROPÄISCHE PATENTSCHRIFT

(11) **EP 3 921 820 B1**
(45) Veröffentlichungstag und Bekanntmachung des Hinweises auf die Patenterteilung: **06.04.2022**
(21) Anmeldenummer: 20808038.2
(22) Anmeldetag: 13.11.2020
(51) Int. Cl.: G08C 17/02

(54) **VERFAHREN UND NETZWERK ZUR VORKONDITIONIERUNG ZUMINDEST EINER KOMPONENTE EINES KRAFTFAHRZEUGS**
METHOD AND NETWORK FOR PRE-CONDITIONING AT LEAST ONE COMPONENT OF A MOTOR VEHICLE
PROCÉDÉ ET RÉSEAU DE PRÉ-CONDITIONNEMENT D'AU MOINS UN COMPOSANT D'UN VÉHICULE AUTOMOBILE

(30) Priorität: 15.01.2020 DE 102020100816
(43) Veröffentlichungstag der Anmeldung: 15.12.2021
(73) Patentinhaber: AUDI AG, 85045 Ingolstadt (DE)
(72) Erfinder: VOLLMANN, Stefan, 85049 Ingolstadt (DE); MEYER, Christian, 84034 Landshut (DE)
(86) Internationale Anmeldenummer: PCT/EP2020/082010
(87) Internationale Veröffentlichungsnummer: WO 2021/144051

(56) Entgegenhaltungen:
- DE-A1-102010 052 812
- DE-A1-102013 220 208
- US-A1- 2019 061 746

## Beschreibung

Die vorliegende Erfindung betrifft ein Verfahren zur Vorkonditionierung zumindest einer Komponente eines ersten Kraftfahrzeugs, dem ein erster Identifikationsschlüssel zugeordnet ist. Sie betrifft überdies ein Netzwerk umfassend eine Vielzahl von Short-Range-Sende-Empfangseinheiten, Fernfeld-Sende-Empfangseinheiten sowie eine zentrale Datenverarbeitungsvorrichtung, die ausgelegt sind zur Durchführung jeweiliger Schritte eines erfindungsgemäßen Verfahrens. Schließlich betrifft sie ein entsprechendes Computerprogramm.

Unter Vorkonditionierung wird die Voreinstellung von bestimmten Betriebsparametern eines Bauteils vor der tatsächlichen Benutzung verstanden.

In diesem Zusammenhang ist aus der US 2016/0207374 A1 ein Verfahren zum thermischen Vorkonditionieren eines Fahrzeuginsassenraums vor der Abfahrt des Fahrzeugs bekannt. Es ist ein Fahrzeugannäherungsdetektionssystem vorgesehen, um eine Distanz zwischen dem Fahrzeug und dem Fahrer zu ermitteln. Es wird die Wahrscheinlichkeit ermittelt, mit der das Fahrzeug den augenblicklichen Ort innerhalb einer vorgesehenen Anzahl von Minuten verlässt, wobei die Wahrscheinlichkeit basiert wird auf der gegenwärtigen Zeit, dem gegenwärtigen Datum, dem Abstand zwischen Fahrer und Fahrzeug, dem gegenwärtigen Fahrzeugort und einer Datenbank mit historischen Daten. Es kann auch eine Steuerung über einen Smartphone-Kalender eines Benutzers vorgesehen sein. Das Fahrzeugannäherungsdetektionssystem kann den Ort eines Smartphones des Fahrers überwachen und daraus den Aufenthaltsort des Fahrers ermitteln. Der Abstand zwischen Fahrer und Fahrzeug kann dann bestimmt werden aus dem Aufenthaltsort des Fahrers und dem augenblicklichen Fahrzeugort. In der historischen Datenbank können eine Vielzahl von Abfahrtszeiten abgelegt sein.

Aus der DE 10 2013 214 557 A1 ist ein Verfahren zur Vorklimatisierung eines Kraftfahrzeugs im Stillstand bekannt. Die Vorklimatisierung erfolgt durch Programmierzeiten von Heizeinheiten durch ein fahrzeugexternes Bedienelement. Es kann eine sofortige oder zeitgesteuerte Aktivierung vorgesehen sein. Das fahrzeugexterne Bedienelement kann in einer separaten Funkfernbedienung oder in einer Schlüsseleinheit integriert sein. Die Aktivierung und Programmierung können mittels einer sogenannten App durch ein Smartphone oder ein Tablet erfolgen. Alternativ kann die Aktivierung zur Vorklimatisierung mittels einer Übermittlung der GPS-Position des fahrzeugexternen Bedienelements oder einer Änderung dieser GPS-Position derart erfolgen, dass das Steuergerät im Fahrzeug diese Position mit der Fahrzeugposition vergleicht und unter einer vorgegebenen Entfernung oder Annäherung zum Fahrzeug die Vorklimatisierung aktiviert. In einer Ausgestaltung kann eine bestimmte Zone, wie zum Beispiel eine Garage zu Hause oder am Arbeitsplatz, vorgemerkt werden, wo diese Funktion nicht aktiviert wird. Es kann jedoch eine Aktivierung der Vorklimatisierung dann erfolgen, wenn eine Bewegung zum Fahrzeug hin detektiert wird. Eine Aktivierung der Heizflächen zur Vorklimatisierung des Fahrzeugs kann im Stillstand durch die Erkennung von Bluetooth-Signalen, die das fahrzeugexterne Bedienelement aussendet, erfolgen.

Aus der JP 2006 347 295 A ist ein Verfahren zur Vortemperierung eines Elektrofahrzeugs bekannt. Der Startzeitpunkt wird basierend auf der Position des Fahrzeugs und des Nutzers, beispielsweise über ein Mobiltelefon, ermittelt, wobei die Relativentfernung, Richtung und Geschwindigkeit der Annäherung genutzt werden.

Weitere Verfahren zu Vorkonditionierung sind bekannt aus der US 2018/0201092, DE 10 2013 220 208, US2019/061746 sowie der DE 10 2014 224 108.

Nachteilig an diesen Verfahren ist der Umstand, dass das ständige Tracken der Position des Identifikationsschlüssels, d.h. beispielsweise eines Smartphones, eines Benutzers den Akku des Identifikationsschlüssels stark beansprucht, so dass sich die Stand-by-Zeiten eines zu den genannten Zwecken eingesetzten Smartphones unerwünscht rasch reduzieren. Im Stand der Technik eingesetzte Smartphones müssen deshalb unerwünscht häufig nachgeladen werden. Es besteht die Gefahr, dass sie zur Durchführung von Telefonaten, ihrer eigentlichen Bestimmung, nicht mehr zur Verfügung stehen.

Die Aufgabe der vorliegenden Erfindung besteht deshalb darin, eine Möglichkeit der Vorkonditionierung zumindest einer Komponente eines Kraftfahrzeugs bereitzustellen, die die Ressourcen eines vom Benutzer zu diesem Zweck mitgeführten Identifikationsschlüssels weniger beansprucht.

Diese Aufgabe wird gelöst durch ein Verfahren mit den Merkmalen von Patentanspruch 1, ein Netzwerk mit den Merkmalen von Patentanspruch 13 sowie ein Computerprogramm mit den Merkmalen von Patentanspruch 14.

Der vorliegenden Erfindung liegt die Erkenntnis zugrunde, dass die Standzeit eines von einem Benutzer mitgeführten Identifikationsschlüssels, der dem Kraftfahrzeug des Benutzers zugeordnet ist, beispielsweise ein Smartphone, verlängert werden kann, wenn zur Ermittlung einer jeweils aktuellen Position dieses Identifikationsschlüssels keine Fernfeld-Sende-Empfangseinheit des Identifikationsschlüssels betrieben wird, sondern eine Short-Range-Sende-Empfangseinheit. Unter "Short-Range-Kommunikation" ist hierbei eine drahtlose Übertragung von Signalen über kurze Distanzen zu verstehen, siehe hierzu https://www.rohm.com/electroniccs/basics/wireless/short-rangewireless-communication oder https://de.wikipedia.org/wiki/short-range_wireless_networks. Fernfeldkommunikation umfasst hierbei insbesondere eine Kommunikation nach einem Mobilfunkstandard. Fernfeld-Sende-Empfangseinheiten senden damit insbesondere gemäß Mobilfunkverfahren, zum Beispiel GSM, LTE und dergleichen, während Short-Range-Sende-Empfangseinheiten beispielsweise über Bluetooth, WLAN und dergleichen mit deutlich weniger Sendeleistung betrieben werden, wobei es neben den erwähnten aktiven Sendern sogar passive Vorrichtungen, beispielsweise Transponder, gibt, die zum Zweck der vorliegenden Erfindung völlig ausreichend sind. Damit kann die den Fernfeld-Funk bereitstellende Instanz in einem Objekt angeordnet werden, das eine deutliche bessere Anbindung an die für die Fernfeld-Sende-Empfangseinheit benötigte Energiebereitstellung verfügt. Beispielsweise können als derartige Objekte Kraftfahrzeuge, die einen deutlich größeren Bedarf an elektrischer Energie aufweisen als ein mobiler Identifikationsschlüssel oder Infrastrukturelemente, die an ein Energieversorgungsnetz angeschlossen sind, Verwendung finden. Es können auch andere Identifikationsschlüssel Anwendung finden, beispielsweise in Abhängigkeit von deren Ladezustand.

Auf diese Weise lässt sich eine zuverlässige Vorkonditionierung zumindest einer Komponente des Kraftfahrzeugs des Benutzers erzielen, ohne die Standzeit seines Identifikationsschlüssels, beispielsweise seines Smartphones, wesentlich zu beeinträchtigen. Danach muss der Akku des Identifikationsschlüssels seltener nachgeladen werden, was den Komfort für den Benutzer sowie die Einsatzbereitschaft seines Identifikationsschlüssels erhöht.

Bei der vorliegenden Erfindung werden demnach zunächst in einem Schritt a) eine Vielzahl an Short-Range-Sende-Empfangseinheiten bereitgestellt. In einem Schritt b) wird der erste Identifikationsschlüssel, der einem ersten Kraftfahrzeug zugeordnet ist, von einem Benutzer mitgeführt, während sich der Benutzer außerhalb des ersten Kraftfahrzeugs fortbewegt. Sobald der erste Identifikationsschlüssel in den Empfangsbereich einer ersten der Short-Range-Sende-Empfangseinheiten gerät, werden in einem Schritt c) erste Positionsdaten des ersten Identifikationsschlüssels durch die erste Short-Range-Sende-Empfangseinheit ermittelt. Zur Ermittlung der jeweiligen Positionsdaten können diese selbständig von der jeweiligen Short-Range-Sende-Empfangseinheit ermittelt werden, sie können jedoch auch von einer entsprechenden Vorrichtung des ersten Identifikationsschlüssels ermittelt und an die jeweilige Short-Range-Sende-Empfangseinheit übertragen werden, die dann quasi die Positionsdaten mit Unterstützung des ersten Identifikationsschlüssels ermittelt. Diese ersten Positionsdaten werden in einem Schritt d) über eine nicht im ersten Identifikationsschlüssel angeordnete Fernfeld-Sende-Empfangseinheit versendet. Sobald der erste Identifikationsschlüssel in den Empfangsbereich zumindest einer weiteren der Short-Range-Sende-Empfangseinheiten gerät, werden in einem Schritt e) durch die weitere Short-Range-Sende-Empfangseinheit weitere Positionsdaten des ersten Identifikationsschlüssels durch die weitere Short-Range-Sende-Empfangseinheit ermittelt. In einem Schritt f) werden die ermittelten zweiten Positionsdaten über eine nicht im ersten Identifikationsschlüssel angeordnete Fernfeld-Sende-Empfangseinheit versendet. Anschließend werden in einem Schritt g) die versendeten zumindest ersten und zweiten Positionsdaten mittels einer Fernfeld-Sende-Empfangseinheit empfangen und es wird zumindest ein Bewegungsvektor für den ersten Identifikationsschlüssel aus den zumindest ersten und zweiten empfangenen Positionsdaten ermittelt. In einem Schritt h) wird geprüft, ob der ermittelte Bewegungsvektor zumindest ein vorgebbares Aktivierungskriterium für eine Aktivierung der Vorkonditionierung der zumindest einen Komponente eines Kraftfahrzeugs erfüllt. Ist dies der Fall, wird in einem Schritt i) die Vorkonditionierung der zumindest einen Komponente des Kraftfahrzeugs aktiviert.

Bevorzugt sind die jeweiligen Short-Range-Sende-Empfangseinheiten fest installiert in jeweiligen Kraftfahrzeugen, in jeweiligen zweiten Identifikationsschlüsseln oder in jeweiligen Infrastrukturelementen angeordnet. Als Infrastrukturelemente kommen beispielsweise Verkehrszeichen, Ampeln, Straßenpfosten und dergleichen in Betracht. Damit ist es sehr wahrscheinlich, dass der Benutzer auf dem Weg zu seinem Kraftfahrzeug mindestens zwei Short-Range-Sende-Empfangseinheiten passiert, so dass die Ermittlung eines Bewegungsvektors als Voraussetzung für eine Aktivierung der Vorkonditionierung der zumindest einen Komponente seines Kraftfahrzeugs erfüllt ist. Insbesondere in Fußgängerzonen, in denen wenige Verkehrszeichen und dergleichen angeordnet sind, können die zweiten Identifikationsschlüssel Anwendung finden.

Besonders bevorzugt werden die jeweiligen Positionsdaten mit in den jeweiligen Kraftfahrzeugen und/oder in den jeweiligen Identifikationsschlüsseln und/oder in den jeweiligen Infrastrukturelementen angeordneten Fernfeld-Sende-Empfangseinheiten versendet. In diesem Zusammenhang kann vorgesehen sein, dass bei der Versendung durch jeweilige zweite Identifikationsschlüssel zunächst der Ladezustand von deren Energiespeicher geprüft wird und die jeweilige Fernfeld-Sende-Empfangseinheit nur dann in Betrieb genommen wird, wenn der Ladezustand über einem vorgebbaren Schwellenwert liegt, beispielsweise mehr als 50% beträgt.

Alternativ kann vorgesehen sein, dass die jeweiligen Positionsdaten zunächst seriell mittels Short-Range-Sende-Empfangseinheiten versendet werden, insbesondere mittels in den jeweiligen Kraftfahrzeugen und/oder jeweiligen zweiten Identifikationsschlüsseln und/oder in den jeweiligen Infrastrukturelementen angeordneten Short-Range-Sende-Empfangseinheiten und bei Auffinden eines Netzwerkelements, das über eine Short-Range-Sende-Empfangseinheit und eine Fernfeld-Sende-Empfangseinheit verfügt, mittels dieser Fernfeld-Sende-Empfangseinheit. Auf diese Weise können zweite Identifikationsschlüssel eingesetzt werden, auch wenn der Ladezustand von deren Energiespeicher unter dem vorgebbaren Schwellenwert liegt, da die Weiterversendung mittels Short-Range-Sende-Empfangseinheit den jeweiligen Energiespeicher nur unwesentlich belastet. Ein weiterer Vorteil dieser Variante besteht darin, dass das Verfahren umsetzbar ist, obwohl die Ausstattung der beteiligten Kraftfahrzeuge, zweiten Identifikationsschlüssel, Infrastrukturelemente mit Fernfeld-Sende-Empfangseinheiten lückenhaft ist. Insbesondere brauchen Infrastrukturelemente beispielsweise aus Kostengründen nur mit Short-Range-Sende-Empfangseinheiten ausgestattet werden, so dass sie über keine eigenen Fernfeld-Sende-Empfangseinheiten verfügen. In Anbetracht der Reichweite von Short-Range-Sende-Empfangseinheiten können damit mit hoher Zuverlässigkeit Positionsdaten ermittelt und zur Ermittlung eines Bewegungsvektors verwendet werden.

Bevorzugt werden die zumindest ersten und zweiten Positionsdaten zur Durchführung zumindest von Schritt g) an eine Fernfeld-Sende-Empfangseinheit einer zentralen Datenverarbeitungsvorrichtung, insbesondere eines Back-end-Servers, gesendet. Dort können Remote entsprechende Speicher und Rechenressourcen bereitgestellt werden, so dass hierdurch mobile Einheiten nicht belastet werden. Überdies können in der zentralen Datenverarbeitungsvorrichtung Bewegungsmuster ermittelt werden, die ein Indiz dafür darstellen, dass der Benutzer innerhalb einer vorgebbaren Zeit sein Kraftfahrzeug mit einer vorgebbaren Wahrscheinlichkeit in Betrieb nehmen wird, so dass es bei Auftreten eines derartigen Bewegungsmusters angezeigt ist, die Vorkonditionierung der zumindest einen Komponente des Kraftfahrzeugs zu aktivieren. Derartige Aktivierungsmuster können demnach in der zentralen Datenverarbeitungsvorrichtung nicht nur ermittelt, sondern dort zur Bereitstellung für einen Vergleich auch abgespeichert sein. Besonders vorteilhaft werden die Positionsdaten anonymisiert übermittelt. Dazu kann beispielsweise tageweise durch einen Zufallsgenerator im ersten Identifikationsschlüssel ein Code erzeugt werden, der dann eine Zuordnung von ermittelten Positionsdaten zu einem bestimmten ersten Identifikationsschlüssel ermöglicht. Dadurch, dass der Code tageweise wechselt, lässt sich demnach das erfindungsgemäße Verfahren ohne Übertragung von personenbezogenen Daten realisieren.

Es ist bevorzugt, wenn die Short-Range-Sende-Empfangseinheiten und die Fernfeld-Sende-Empfangseinheiten zusammen mit der zentralen Datenverarbeitungsvorrichtung, insbesondere mit einer darin angeordneten Fernfeld-Sende-Empfangseinheit, ein Kommunikationsnetzwerk bilden. In diesem Zusammenhang kann vorgesehen werden, das Kommunikationsnetzwerk markenspezifisch oder anwenderspezifisch zu betreiben. So kann es sich um eine in einem Kraftfahrzeug installierte Software handeln, die die Funktion und den Beitritt zum Netzwerk steuert und beispielsweise über eine Mensch-Maschine-Schnittstelle aktiviert werden muss.

Bevorzugt führt demnach die zentrale Datenverarbeitungsvorrichtung auch weiterhin die Schritte h) und i) durch, das heißt, wenn die Prüfung in Schritt h) positiv ausfällt, sendet sie ein Aktivierungssignal zum Aktivieren der Vorkonditionierung zumindest einer Komponente des ersten Kraftfahrzeugs an eine Steuervorrichtung des ersten Kraftfahrzeugs.

Bevorzugt sendet die zentrale Datenverarbeitungsvorrichtung über eine Fernfeld-Sende-Empfangseinheit die in Schritt d) ermittelten Positionsdaten des ersten Identifikationsschlüssels und/oder des in Schritt e) ermittelten Bewegungsvektors an eine Fernfeld-Sende-Empfangseinheit, die dem ersten Kraftfahrzeug zugeordnet ist, wobei die Fernfeld-Sende-Empfangseinheit die empfangenen Daten an eine Steuervorrichtung des ersten Kraftfahrzeugs sendet, wobei die Steuervorrichtung entweder die Schritte g), h) und i) oder die Schritte h) und i) durchführt. Mit anderen Worten kann die Ermittlung des Bewegungsvektors entweder in der zentralen Datenverarbeitungsvorrichtung oder in einer Steuervorrichtung des ersten Kraftfahrzeugs vorgenommen werden. Erfolgt dies in der Variante der Steuervorrichtung des Kraftfahrzeugs, so ist eine Konfiguration für den Benutzer des ersten Kraftfahrzeugs im Hinblick darauf, wann zu aktivieren ist, welche Komponenten zu aktivieren sind und dergleichen, besonders einfach möglich.

Bevorzugt werden der erste und/oder die weiteren Identifikationsschlüssel jeweils durch einen Fahrzeugschlüssel, eine Chip-Karte oder ein mobiles Endgerät, beispielsweise ein Smartphone, gebildet. Bei derartigen Objekten ist die Wahrscheinlichkeit sehr hoch, dass sie ohnehin von einem Benutzer mitgeführt werden, so dass der Aufwand zur Durchführung des erfindungsgemäßen Verfahrens, besonders niedrig gehalten werden kann.

Es hat sich als besonders vorteilhaft erwiesen, die Vorkonditionierung zumindest einer der folgenden Komponenten zu aktivieren: eine Klimatisierungsvorrichtung, ein Aggregatelager, insbesondere zur Lagerung von Antriebs- und Nebenaggregaten, ein Fahrwerkslager, insbesondere in der Übertragungskette Rad-Kraftfahrzeugkarosserie, eine Fahrzeugbatterie, ein Katalysator, ein Fahrzeugtank, eine Leistungselektronikkomponente. In diesem Zusammenhang ist darauf hinzuweisen, dass eine Vorkonditionierung im Sinne der vorliegenden Erfindung nicht nur die Temperierung eines Fahrzeuginnenraums oder einer Batterie betrifft, sondern auch Komponenten, die andere Eigenschaften beeinflussen, wie beispielsweise den Fahrkomfort. So können erfindungsgemäß Aggregatelager eines Fahrzeuges vorgeheizt werden, was sich positiv auf die Dämpfungseigenschaften oder die Viskosität von Fluiden auswirkt und somit einen komfortablen Federungskomfort bereits vom ersten Kilometer an ermöglicht. Beheizte Lagervarianten sind beispielsweise bekannt aus der DE 35 01 260, der DE 10 2012 008 386, der DE 37 35 553, der EP 224 355 sowie der DE 10 2007 049 683.

Bevorzugt wird im Schritt h) als vorgebbares Aktivierungskriterium geprüft eine Unterschreitung eines vorgebbaren Entfernungsradius vom ersten Kraftfahrzeug, wobei zusätzlich eine Richtung des Bewegungsvektors (Richtung und Geschwindigkeit) über eine vorgebbare Zeitdauer ein vorgebbares Richtungskriterium erfüllt, oder eine Abfolge von Bewegungsmustern, insbesondere von in der zentralen Datenverarbeitungsvorrichtung oder der Steuervorrichtung des ersten Kraftfahrzeugs hinterlegten, bevorzugt gelernten Bewegungsmustern.

Weiterhin bevorzugt wird ein Parameter der Vorkonditionierung, insbesondere die der mindestens einen Komponente des Kraftfahrzeugs zugeführte Leistung, in Abhängigkeit der Abfolge von Bewegungsmustern variiert. So kann sichergestellt werden, dass eine gewünschte Vorkonditionierung, beispielsweise die Einstellung einer vorgebbaren Temperatur der jeweiligen Komponenten, einerseits rechtzeitig bis zum Eintreffen des Benutzers bei seinem Kraftfahrzeug andererseits ohne unnötigen Energieaufwand erreicht wird.

Gemäß einer bevorzugten Weiterbildung sind die Short-Range-Sende-Empfangseinheiten und oder die Fernfeld-Sende-Empfangseinheiten des Kraftfahrzeugs ausgelegt, Daten zum Prädizieren einer Fortbewegungsgeschwindigkeit für den ersten Identifikationsschlüssel bis zum Eintreffen des ersten Identifikationsschlüssels bei dem ersten Kraftfahrzeug an die zentrale Datenverarbeitungsvorrichtung zu senden, wobei die zentrale Datenverarbeitungsvorrichtung oder die Steuervorrichtung des ersten Kraftfahrzeugs einen Zeitpunkt der Aktivierung der mindestens einen Komponente des Kraftfahrzeugs in Abhängigkeit der prädizierten Fortbewegungsgeschwindigkeit festlegt. Mit anderen Worten können Schwarmdaten anderer erster Identifikationsschlüssel genutzt werden, um eine Gehzeit bis zum Kraftfahrzeug zu ermitteln, um einer hohen Frequentierung auf einem Gehweg oder langen Wartezeiten an der Kasse eines Parkhauses Rechnung zu tragen. Bei den Schwarmdaten handelt es sich bevorzugt um anonymisierte quantitative Daten, die zur statischen Berechnung einer statischen Wahrscheinlichkeit genutzt werden.

Weitere vorteilhafte Ausführungsformen ergeben sich aus den Unteransprüchen.

Die vorliegende Erfindung betrifft auch ein Netzwerk, umfassend eine Vielzahl von Short-Range-Sende-Empfangseinheiten, Fernfeld-Sende-Empfangseinheiten sowie eine zentrale Datenverarbeitungsvorrichtung, die ausgelegt sind zur Durchführung jeweiliger Schritte eines erfindungsgemäßen Verfahrens. Schließlich betrifft die vorliegende Erfindung ein Computerprogramm, welches direkt in einen Speicher einer Steuereinrichtung einer Short-Range-Sende-Empfangseinheit, einer Fernfeld-Sende-Empfangseinheit oder eine zentralen Datenverarbeitungsvorrichtung ladbar ist, mit Programm-Mitteln, um jeweilige Schritte eines erfindungsgemäßen Verfahrens auszuführen, wenn das Programm in der jeweiligen Steuereinrichtung ausgeführt wird.

Die im Zusammenhang mit dem erfindungsgemäßen Verfahren vorgestellten bevorzugten Ausführungsformen und deren Vorteile gelten entsprechend für das erfindungsgemäße Netzwerk sowie das erfindungsgemäße Computerprogramm.

Zu der Erfindung gehört auch die Steuervorrichtung für das Kraftfahrzeug. Eine derartige Steuervorrichtung weist eine Prozessoreinrichtung auf, die dazu eingerichtet ist, Schritte des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsformen des erfindungsgemäßen Verfahrens durchzuführen. Der Programmcode kann in einem Datenspeicher der Prozessoreinrichtung gespeichert sein.

Die Erfindung umfasst auch die Kombinationen der Merkmale der beschriebenen Ausführungsformen.

Im Folgenden sind Ausführungsbeispiele der Erfindung beschrieben. Hierzu zeigen:
- Fig. 1: eine schematische Darstellung zur Erläuterung eines Ausführungsbeispiels des erfindungsgemäßen Verfahrens; und
- Fig. 2: einen Signalflussgraphen für ein Ausführungsbeispiel eines erfindungsgemäßen Verfahrens.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

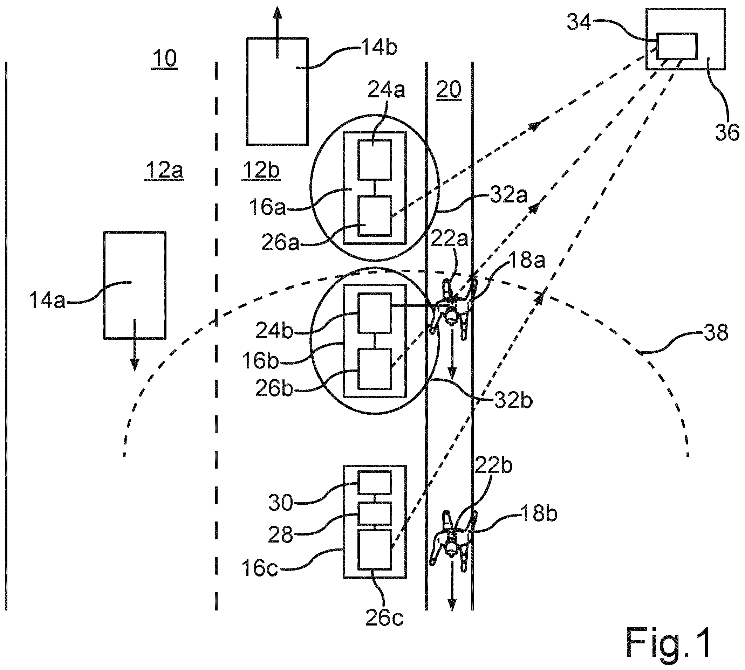

Fig. 1 zeigt eine Straße 10 mit zwei Fahrspuren 12a, 12b, auf der jeweilige Kraftfahrzeuge 14a, 14b entsprechend den angezeigten Richtungspfeilen unterwegs sind. Auf der Fahrspur 12b sind am rechten Rand Fahrzeuge 16a, 16b, 16c geparkt. Das Fahrzeug 16c ist das Fahrzeug eines Benutzers 18a, demnach im Kontext dieses Ausführungsbeispiels ein Eigenfahrzeug. Entsprechend sind die Fahrzeuge 16a und 16b Fremdfahrzeuge.

Der Benutzer 18a geht entsprechend dem ihm zugewiesenen Richtungspfeil auf einem Gehweg 20 und passiert dabei die Kraftfahrzeuge 16a, 16b. Der Benutzer 18 führt einen Identifikationsschlüssel 22a, beispielsweise einen Fahrzeugschlüssel, eine Chip-Karte oder ein mobiles Endgerät, beispielsweise ein Smartphone, mit sich.

In den Kraftfahrzeugen 16a, 16b sind Short-Range-Sende-Empfangseinheiten 24a, 24b sowie Fernfeld-Sende-Empfangseinheiten 26a, 26b angeordnet. Die jeweiligen Einheiten sind jeweils fahrzeugintern miteinander gekoppelt.

In dem Kraftfahrzeug 16c ist zumindest eine Fernfeld-Empfangseinheit 26c, eine Steuervorrichtung 28 sowie eine vorzukonditionierende Komponente 30 angeordnet.

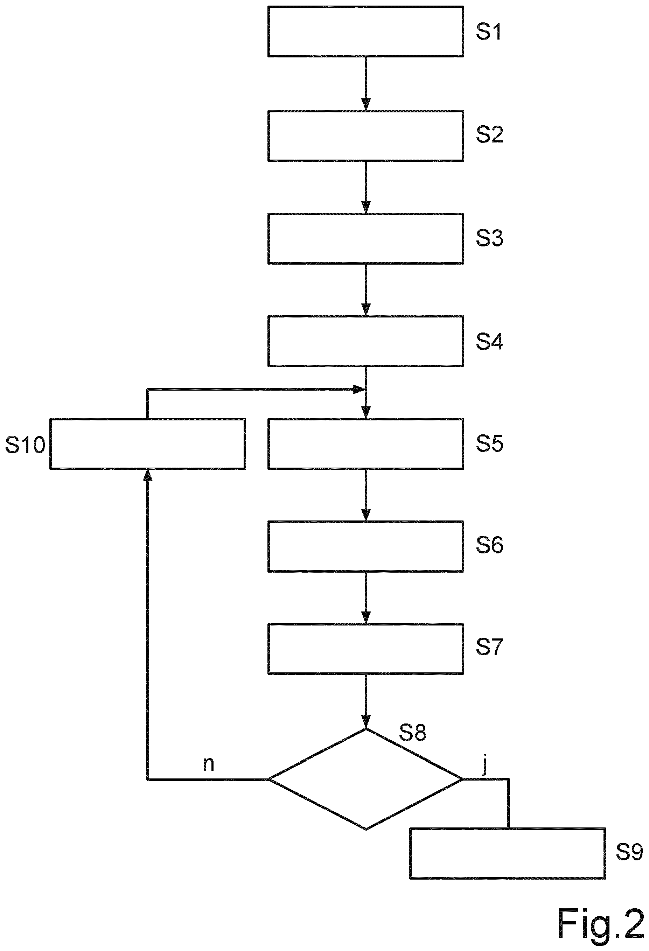

Nachfolgend wird ein Ausführungsbeispiel eines erfindungsgemäßen Verfahrens mit Bezug auf Fig. 2 beschrieben:
In einem Schritt S1 wird demnach eine Vielzahl von Short-Range-Sende-Empfangseinheiten 24a, 24b bereitgestellt. Gemäß Schritt S2 wird der Identifikationsschlüssel 22a vom Benutzer 18a mitgeführt, wenn sich der Benutzer 18a außerhalb seines Kraftfahrzeugs 16c fortbewegt. Sobald sein Identifikationsschlüssel 22a in den Empfangsbereich 32a der Short-Range-Sende-Empfangseinheit 24a gerät, werden erste Positionsdaten des Identifikationsschlüssels 22a durch die Short-Range-Sende-Empfangseinheit 24a ermittelt, siehe Schritt S3. Diese ermittelten ersten Positionsdaten werden über die im Fahrzeug 16a angeordnete Fernfeld-Sende-Empfangseinheit 26a an eine Fernfeld-Sende-Empfangseinheit 34 einer zentralen Datenverarbeitungsvorrichtung 36 gesendet, siehe Schritt S4. Auf seinen Weg entlang des Gehwegs 20 kommt der Identifikationsschlüssel 22a des Benutzers 18a anschließend in den Empfangsbereich 32b der Short-Range-Sende-Empfangseinheit 24b des Kraftfahrzeugs 16b, welche daraufhin zweite Positionsdaten des Identifikationsschlüssels 22a durch die weitere Short-Range-Sende-Empfangseinheit 24b ermittelt, siehe Schritt S5. Diese ermittelten zweiten Positionsdaten werden über die Fernfeld-Sende-Empfangseinheit 26b des Kraftfahrzeugs 16b ebenfalls an die Fernfeld-Sende-Empfangseinheit 34 der zentralen Datenverarbeitungsvorrichtung 36 gesendet, siehe Schritt S6. Im Schritt S7 werden die versendeten ersten und zweiten Positionsdaten von der Fernfeld-Sende-Empfangseinheit 34 der zentralen Datenverarbeitungsvorrichtung 36 empfangen und ein Bewegungsvektor für den Identifikationsschlüssel 18a aus den empfangenen Positionsdaten ermittelt. Es ist offensichtlich, dass die ersten und zweiten Positionsdaten zu unterschiedlichen Zeitpunkten von der Fernfeld-Sende-Empfangseinheit 34 der zentralen Datenverarbeitungsvorrichtung 36 empfangen werden, jedoch hier der Empfang lediglich zur Erläuterung in einem Schritt zusammengefasst ist.

Im Schritt S8 wird geprüft, ob der ermittelte Bewegungsvektor ein vorgebbares Aktivierungskriterium für eine Aktivierung der Vorkonditionierung der Komponente 30 des Kraftfahrzeugs 16c erfüllt. In diesem Zusammenhang kann geprüft werden, ob der Benutzer 18a einen vorgebbaren Entfernungsradius 38 von seinem Fahrzeug 16c unterschreitet. Diese Ermittlung findet bevorzugt in der zentralen Datenverarbeitungsvorrichtung 36 statt. Wird dies bejaht, so wird im Schritt S9 die Vorkonditionierung der Komponente 30 des Kraftfahrzeugs 16c aktiviert, indem die Fernfeld-Sende-Empfangseinheit 34 der zentralen Datenverarbeitungsvorrichtung 36 ein entsprechendes Aktivierungssignal an die Fernfeld-Sende-Empfangseinheit 34 des Kraftfahrzeugs 16c sendet, welche das empfangene Aktivierungssignal an die Steuervorrichtung 28 sendet, die dann die Komponente 30 ansteuert. Wenn die Prüfung im Schritt S9 verneint wird, werden die zweiten Positionsdaten zu ersten Positionsdaten, siehe Schritt S10, und das Verfahren springt zurück zu Schritt S5.

In nicht dargestellten Ausführungsformen können auch mehrere Positionsdaten zur Ermittlung eines Bewegungsvektors ausgewertet werden, wobei das Verfahren dann entsprechend anzupassen ist.

Nicht dargestellt sind Energiespeichervorrichtungen im Identifikationsschlüssel 22a sowie in den Kraftfahrzeugen 16a bis 16c zur Versorgung des Identifikationsschlüssels 22a und der Kraftfahrzeuge 16a bis 16c mit elektrischer Energie.

Wie der Fig. 1 entnommen werden kann, ist auf dem Gehweg 20 vor dem Benutzer 18a ein weiterer Benutzer 18b mit einem Identifikationsschlüssel 22b unterwegs. Durch Auswertung der Positionsdaten des Identifikationsschlüssels 18b kann eine Fortbewegungsgeschwindigkeit des Benutzers 22a prädiziert werden und bei der Erzeugung des Aktivierungssignals zur Aktivierung der Komponente 30 des Kraftfahrzeugs 16c durch die Datenverarbeitungsvorrichtung 36 berücksichtigt werden. Beispielsweise kann bei niedriger prädizierter Fortbewegungsgeschwindigkeit die Aktivierung der Vorkonditionierung zu einem späteren Zeitpunkt stattfinden als bei höherer prädizierter Fortbewegungsgeschwindigkeit. Weiterhin kann bei höherer prädizierter Fortbewegungsgeschwindigkeit das Aktivierungssignal derart gebildet werden, dass die Komponente 30 mit höherer Leistung durch entsprechende Ansteuerung durch die Steuervorrichtung 28 betrieben wird als bei niedrigerer prädizierter Fortbewegungsgeschwindigkeit.

## Patentansprüche

1. Verfahren zur Vorkonditionierung zumindest einer Komponente (30) eines ersten Kraftfahrzeugs (16c), dem ein erster Identifikationsschlüssel (22a) zugeordnet ist,
folgende Schritte umfassend:
a) Bereitstellen einer Vielzahl von Short-Range-Sende-Empfangseinheiten (24a, 24b) (S1);
b) der erste Identifikationsschlüssel (22a) wird von einem Benutzer (18a) mitgeführt, während sich der Benutzer außerhalb des ersten Kraftfahrzeugs (16c) fortbewegt (S2);
c) sobald der erste Identifikationsschlüssel (22a) in den Empfangsbereich (30a) einer ersten der Short-Range-Sende-Empfangseinheiten (24a) gerät: Ermitteln erster Positionsdaten des ersten Identifikationsschlüssels durch die erste Short-Range-Sende-Empfangseinheit (S3);
d) Versenden der ermittelten ersten Positionsdaten über eine nicht im ersten Identifikationsschlüssel (22a) angeordnete Fernfeld-Sende-Empfangseinheit (26a) (S4);
e) sobald der erste Identifikationsschlüssel in den Empfangsbereich (32b) zumindest einer weiteren der Short-Range-Sende-Empfangseinheiten (24b) gerät: Ermitteln zweiter Positionsdaten des ersten Identifikationsschlüssels durch die weitere Short-Range-Sende-Empfangseinheit (S5);
f) Versenden der ermittelten zweiten Positionsdaten über eine nicht im ersten Identifikationsschlüssel angeordnete Fernfeld-Sende-Empfangseinheit (26b) (S6);
g) Empfangen der versendeten zumindest ersten und zweiten Positionsdaten mittels einer Fernfeld-Sende-Empfangseinheit (34) und Ermitteln zumindest eines Bewegungsvektors für den ersten Identifikationsschlüssel aus den zumindest ersten und zweiten empfangenen Positionsdaten (S7);
h) Prüfen, ob der ermittelte Bewegungsvektor zumindest ein vorgebbares Aktivierungskriterium für eine Aktivierung der Vorkonditionierung der zumindest einen Komponente des Kraftfahrzeugs erfüllt (S8);
i)Falls Schritt h) bejaht wird: Aktivieren der Vorkonditionierung der zumindest einen Komponente des ersten Kraftfahrzeugs (S9).

2. Verfahren nach Anspruch 1,
**dadurch gekennzeichnet,**
**dass** die Short-Range-Sende-Empfangseinheiten (24a; 24b) fest installiert in jeweiligen Kraftfahrzeugen (16a; 16b), in jeweiligen zweiten Identifikationsschlüsseln oder in jeweiligen Infrastrukturelementen angeordnet werden.

3. Verfahren nach Anspruch 2,
**dadurch gekennzeichnet,**
**dass** die jeweiligen Positionsdaten mit in den jeweiligen Kraftfahrzeugen und/oder in den jeweiligen zweiten Identifikationsschlüsseln und/oder in den jeweiligen Infrastrukturelementen angeordneten Fernfeld-Sende-Empfangseinheiten (26a; 26b) versendet werden, und/oder
**dass** die jeweiligen Positionsdaten zunächst seriell mittels Short-Range-Sende-Empfangseinheiten versendet werden, insbesondere mittels in den jeweiligen Kraftfahrzeugen und/oder jeweiligen zweiten Identifikationsschlüsseln und/oder in den jeweiligen Infrastrukturelementen angeordneten Short-Range-Sende-Empfangseinheiten, und bei Auffinden eines Netzwerkelements, das über eine Short-Range-Sende-Empfangseinheit und eine Fernfeld-Sende-Empfangseinheit verfügt, mittels dieser Fernfeld-Sende-Empfangseinheit.

4. Verfahren nach Anspruch 3,
**dadurch gekennzeichnet,**
**dass** die zumindest ersten und zweiten Positionsdaten zur Durchführung zumindest von Schritt g) an eine Fernfeld-Sende-Empfangseinheit (34) einer zentralen Datenverarbeitungsvorrichtung (36), insbesondere eines Backend-Servers, gesendet werden.

5. Verfahren nach einem der Anspruch 4,
**dadurch gekennzeichnet,**
**dass** die Short-Range-Sende-Empfangseinheiten und die Fernfeld-Sende-Empfangseinheiten zusammen mit der zentralen Datenverarbeitungsvorrichtung ein Kommunikations-Netzwerk bilden.

6. Verfahren nach einem der Ansprüche 4 oder 5,
**dadurch gekennzeichnet,**
**dass** die zentrale Datenverarbeitungsvorrichtung weiterhin die Schritte h) und i) durchführt.

7. Verfahren nach einem der Ansprüche 4 bis 6,
**dadurch gekennzeichnet,**
**dass** die zentrale Datenverarbeitungsvorrichtung über eine Fernfeld-Sende-Empfangseinheit (34) die in Schritt d) ermittelten Positionsdaten des ersten Identifikationsschlüssels und/oder den in Schritt e) ermittelten Bewegungsvektor an eine Fernfeld-Sende-Empfangseinheit sendet, die dem ersten Kraftfahrzeug zugeordnet ist, wobei die Fernfeld-Sende-Empfangseinheit (26c) die empfangenen Daten an eine Steuervorrichtung des ersten Kraftfahrzeugs (16c) sendet, wobei diese Steuervorrichtung (28) entweder die Schritte g), h) und i) oder die Schritte h) und i) durchführt.

8. Verfahren nach einem der vorhergehenden Ansprüche,
**dadurch gekennzeichnet,**
**dass** der erste und/oder die weiteren Identifikationsschlüssel jeweils durch einen Fahrzeugschlüssel, eine Chipkarte oder ein mobiles Endgerät gebildet wird.

9. Verfahren nach einem der vorhergehenden Ansprüche,
**dadurch gekennzeichnet,**
**dass** die Vorkonditionierung zumindest einer der folgenden Komponenten (30) aktiviert wird:
- eine Klimatisierungsvorrichtung;
- ein Aggregatelager, insbesondere zur Lagerung von Antriebs- und Nebenaggregaten;
- ein Fahrwerkslager, insbesondere in der Übertragungskette Rad - Kraftfahrzeugkarosserie;
- eine Fahrzeugbatterie;
- ein Katalysator;
- ein Fahrzeugtank;
- eine Leistungselektronikkomponente.

10. Verfahren nach einem der vorhergehenden Ansprüche,
**dadurch gekennzeichnet,**
**dass** in Schritt h) als vorgebbares Aktivierungskriterium geprüft wird:
- eine Unterschreitung eines vorgebbaren Entfernungsradius (38) vom ersten Kraftfahrzeug, wobei zusätzlich eine Richtung des Bewegungsvektors (Richtung und Geschwindigkeit) über eine vorgebbare Zeitdauer ein vorgebbares Richtungskriterium erfüllt;
- eine Abfolge von Bewegungsmustern, insbesondere von in der zentralen Datenverarbeitungsanlage oder der Steuervorrichtung des ersten Kraftfahrzeugs hinterlegten, bevorzugt gelernten, Bewegungsmustern.

11. Verfahren nach Anspruch 10,
**dadurch gekennzeichnet,**
**dass** ein Parameter der Vorkonditionierung, insbesondere die der mindestens einen Komponente des Kraftfahrzeugs zugeführte Leistung, in Abhängigkeit der Abfolge von Bewegungsmustern variiert wird.

12. Verfahren nach einem der vorhergehenden Ansprüche,
**dadurch gekennzeichnet,**
**dass** die Short-Range-Sende-Empfangseinheiten und/oder die Fernfeld-Sende-Empfangseinheiten des Netzwerks ausgelegt sind, relevante Daten zum Prädizieren einer Fortbewegungsgeschwindigkeit für den ersten Identifikationsschlüssel bis zum Eintreffen des ersten Identifikationsschlüssels bei dem ersten Kraftfahrzeug an die zentrale Datenverarbeitungsvorrichtung zu senden, wobei
- die zentrale Datenverarbeitungsvorrichtung, oder
- die Steuervorrichtung des ersten Kraftfahrzeugs
einen Zeitpunkt der Aktivierung der mindestens einen Komponente des Kraftfahrzeugs in Abhängigkeit der prädizierten Fortbewegungsgeschwindigkeit festlegt.

13. Netzwerk umfassend eine Vielzahl von Short-Range-Sende-Empfangseinheiten, Fernfeld-Sende-Empfangseinheiten sowie eine zentrale Datenverarbeitungsvorrichtung, die ausgelegt sind zur Durchführung jeweiliger Schritte eines Verfahrens nach einem der Ansprüche 1 bis 12.

14. . Computerprogramm, welches direkt in einen Speicher einer Steuereinrichtung einer Short-Range-Sende-Empfangseinheit, einer Fernfeld-Sende-Empfangseinheit oder einer zentralen Datenverarbeitungsvorrichtung ladbar ist, mit Programm-Mitteln, um jeweilige Schritte des Verfahrens nach einem der Ansprüche 1 bis 12 auszuführen, wenn das Programm in der jeweiligen Steuereinrichtung ausgeführt wird.

## Claims

1. Method for preconditioning at least one component (30) of a first motor vehicle (16c), to which a first identification key (22a) is assigned,
comprising the following steps:
a) providing a plurality of short-range transceiver units (24a, 24b) (S1);
b) the first identification key (22a) is carried by a user (18a), while the user is moving outside the first motor vehicle (16c) (S2);
c) as soon as the first identification key (22a) enters the reception range (30a) of a first of the short-range transceiver units (24a): determining first position data of the first identification key by the first short-range transceiver unit (S3);
d) transmitting the determined first position data via a far-field transceiver unit (26a) not arranged in the first identification key (22a) (S4);
e) as soon as the first identification key enters the reception range (32b) of at least one of the further short-range-transceiver units (24b): determining second position data of the first identification key by the further short-range transceiver unit (S5);
f) transmitting the determined second position data via a far-field transceiver unit (26b) not arranged in the first identification key (S6);
g) receiving the transmitted at least first and second position data by means of a far-field transceiver unit (34) and determining at least one movement vector for the first identification key from the at least first and second received position data (S7);
h) checking whether the determined movement vector satisfies at least one predeterminable activation criterion for activating the preconditioning of the at least one component of the motor vehicle (S8);
i) if step h) is answered in the affirmative: activating the preconditioning of the at least one component of the first motor vehicle (S9).

2. Method according to claim 1,
**characterised in that**,
the short-range transceiver units (24a; 24b) are installed fixed in respective motor vehicles (16a; 16b), in respective second identification keys or in respective infrastructure elements.

3. Method according to claim 2,
**characterised in that**,
the respective position data are transmitted by means of far-field transceiver units (26a; 26b) arranged in the respective motor vehicles and/or in the respective second identification keys and/or in the respective infrastructure elements, and/or
the respective position data are initially transmitted serially by means of short-range transceiver units, in particular by means of short-range transceiver units arranged in the respective motor vehicles and/or respective second identification keys and/or in the respective infrastructure elements, and when a network element which has a short-range transceiver unit and a far-field transceiver unit is found by means of this far-field transceiver unit.

4. Method according to claim 3,
**characterised in that**,
the at least first and second position data are sent to a far-field transceiver unit (34) of a central processing device (36), in particular a backend server, for performing at least step g).

5. Method according to any of claim 4,
**characterised in that**,
the short-range transceiver units and the far-field transceiver units form a communication network together with the central data processing device.

6. Method according to any of claims 4 or 5,
**characterised in that**,
the central data processing device further performs the steps h) and i).

7. Method according to any of claims 4 to 6,
**characterised in that**,
the central data processing device via a far-field transceiver unit (34) transmits the position data of the first identification key determined in step d) and/or the movement vector determined in step e) to a far-field transceiver unit which is associated with the first motor vehicle, wherein the far-field transceiver unit (26c) transmits the received data to a control device of the first motor vehicle (16c), wherein this control device (28) performs either steps g), h) and i) or steps h) and i).

8. Method according to any of the preceding claims,
**characterised in that**,
the first and/or the further identification keys are each formed by a vehicle key, a chip card or a mobile terminal device.

9. Method according to any of the preceding claims,
**characterised in that**,
the preconditioning of at least one of the following components (30) is activated:
- an air-conditioning device;
- an aggregate bearing, in particular for bearing drive and auxiliary aggregates;
- a chassis bearing, in particular in the transmission chain wheel-motor vehicle body;
- a vehicle battery;
- a catalytic converter;
- a vehicle tank;
- a power electronics component.

10. Method according to any of the preceding claims,
**characterised in that**,
in step h) as a predeterminable activation criterion it is checked:
- falling below a predeterminable distance radius (38) from the first motor vehicle, wherein additionally a direction of the movement vector (direction and speed) fulfils a predeterminable direction criterion over a predeterminable period of time;
- a sequence of movement patterns, in particular of preferably learned movement patterns stored in the central data processing system or the control device of the first motor vehicle.

11. Method according to claim 10,
**characterised in that**,
a parameter of the preconditioning, in particular the power supplied to the at least one component of the motor vehicle, is varied as a function of the sequence of movement patterns.

12. Method according to any of the preceding claims,
**characterised in that**,
the short-range transceiver units and/or the far-field transceiver units of the network are configured to transmit relevant data for predicting a speed of travel for the first identification key to the central processing device until the arrival of the first identification key at the first motor vehicle, wherein
- the central data processing device, or
- the control device of the first motor vehicle
a time point of the activation of the at least one component of the motor vehicle as a function of the predicted speed of travel.

13. Network comprising a plurality of short-range transceiver units, far-field transceiver units and a central data processing device which is configured to perform respective steps of a method according to any of claims 1 to 12.

14. Computer program, which can be loaded directly into a memory of a control device of a short-range transceiver unit, a far-field transceiver unit or a central data processing device, comprising program means for performing respective steps of the method according to any of claims 1 to 12 when the program is performed in the respective control device.

## Revendications

1. Procédé de préconditionnement d'au moins un composant (30) d'un premier véhicule automobile (16c), auquel une première clé d'identification (22a) est affectée,
les étapes suivantes consistant à :
a) fournir une pluralité d'unités d'émission-réception à courte portée (24a, 24b) (S1) ;
b) la première clé d'identification (22a) est portée par un utilisateur (18a) pendant que l'utilisateur se déplace à l'extérieur du premier véhicule automobile (16c) (S2) ;
c) dès que la première clé d'identification (22a) entre dans la zone de réception (30a) d'une première des unités d'émission-réception à courte portée (24a) : obtenir de premières données de position de la première clé d'identification par la première unité d'émission-réception à courte portée (S3) ;
d) envoyer de premières données de position déterminées par l'intermédiaire d'une unité d'émission-réception à champ lointain (26a) (S4) non disposée dans la première clé d'identification (22a) ;
e) dès que la première clé d'identification entre dans la zone de réception (32b) d'au moins une autre des unités d'émission-réception à courte portée (24b) : obtenir de secondes données de position de la première clé d'identification par l'autre unité d'émission-réception à courte portée (S5) ;
f) envoyer de secondes données de position déterminées par l'intermédiaire d'une unité d'émission-réception à champ lointain (26b) (S6) non disposée dans la première clé d'identification ;
g) recevoir les au moins premières et secondes données de position envoyées au moyen d'une unité d'émission-réception à champ lointain (34) et déterminer au moins un vecteur de mouvement pour la première clé d'identification à partir des au moins premières et secondes données de position reçues (S7) ;
h) vérifier si le vecteur de mouvement déterminé remplit au moins un critère d'activation prédéterminable pour une activation du préconditionnement de l'au moins un composant du véhicule automobile (S8) ;
i) si l'étape h) est affirmée : activer le préconditionnement de l'au moins un composant du premier véhicule automobile (S9).

2. Procédé selon la revendication 1,
**caractérisé en ce**
**que** les unités d'émission-réception à courte portée (24a ; 24b) sont disposées de manière fixe dans des véhicules automobiles respectifs (16a ; 16b), dans de secondes clés d'identification respectives ou dans des éléments d'infrastructure respectifs.

3. Procédé selon la revendication 2,
**caractérisé en ce**
**que** les données de position respectives sont envoyées avec des unités d'émissionréception à champ lointain (26a ; 26b) disposées dans les véhicules automobiles respectifs et/ou dans les secondes clés d'identification respectives et/ou dans les éléments d'infrastructure respectifs, et/ou
**que** les données de position respectives sont d'abord envoyées en série au moyen d'unités d'émission-réception à courte portée, en particulier au moyen d'unités d'émission-réception à courte portée disposées dans les véhicules automobiles respectifs et/ou dans les secondes clés d'identification respectives et/ou dans les éléments d'infrastructure respectifs et, lorsqu'un élément de réseau qui dispose d'une unité d'émission-réception à courte portée et d'une unité d'émission-réception à champ lointain est trouvé, au moyen de cette unité d'émission-réception à champ lointain.

4. Procédé selon la revendication 3,
**caractérisé en ce**
**que** les au moins premières et secondes données de position sont envoyées à une unité d'émission-réception de champ lointain (34) d'un dispositif de traitement de données central (36), en particulier d'un serveur backend, pour l'exécution d'au moins l'étape g).

5. Procédé selon l'une quelconque de la revendication 4,
**caractérisé en ce**
**que** les unités d'émission-réception à courte portée et les unités d'émissionréception à champ lointain forment, avec le dispositif de traitement de données central, un réseau de communication.

6. Procédé selon l'une quelconque des revendications 4 ou 5,
**caractérisé en ce**
**que** le dispositif de traitement de données central exécute en outre les étapes h) et i).

7. Procédé selon l'une quelconque des revendications 4 à 6,
**caractérisé en ce**
**que** le dispositif de traitement de données central envoie, par l'intermédiaire d'une unité d'émission-réception à champ lointain (34), les données de position de la première clé d'identification déterminées à l'étape d) et/ou le vecteur de mouvement déterminé à l'étape e) à une unité d'émission-réception à champ lointain, affectée au premier véhicule automobile, dans lequel l'unité d'émission-réception à champ lointain (26c) transmet les données reçues à un dispositif de commande du premier véhicule automobile (16c), dans lequel ce dispositif de commande (28) exécute soit les étapes g), h) et i), soit les étapes h) et i).

8. Procédé selon l'une quelconque des revendications précédentes,
**caractérisé en ce**
**que** la première et/ou les autres clés d'identification sont formées respectivement par une clé de véhicule, une carte à puce ou un terminal mobile.

9. Procédé selon l'une quelconque des revendications précédentes,
**caractérisé en ce**
**que** le préconditionnement d'au moins un des composants (30) suivants est activé :
- un dispositif de climatisation ;
- un stockage de groupe, en particulier pour le stockage de groupes d'entraînement et auxiliaires ;
- un stockage de châssis, en particulier dans la chaîne de transmission de rouecarrosserie de véhicule automobile ;
- une batterie de véhicule ;
- un catalyseur ;
- un réservoir de véhicule ;
- un composant électronique de puissance.

10. Procédé selon l'une quelconque des revendications précédentes,
**caractérisé en ce**
**qu'**à l'étape h), est vérifié comme critère d'activation prédéterminable :
- un sous-dépassement d'un rayon d'éloignement (38) prédéterminable du premier véhicule automobile, dans lequel une direction du vecteur de mouvement (direction et vitesse) satisfait en outre un critère de direction prédéterminable pendant une durée prédéterminable ;
- une séquence de modèles de mouvement, en particulier de modèles de mouvement enregistrés, de préférence appris, dans l'installation de traitement de données centrale ou dans le dispositif de commande du premier véhicule automobile.

11. Procédé selon la revendication 10,
**caractérisé en ce**
**qu'**un paramètre du préconditionnement, en particulier la puissance fournie à au moins un composant du véhicule automobile, est modifié en fonction de la séquence de modèles de mouvement.

12. Procédé selon l'une quelconque des revendications précédentes,
**caractérisé en ce**
**que** les unités d'émission-réception à courte portée et/ou les unités d'émissionréception à champ lointain du réseau sont adaptées pour envoyer au dispositif de traitement de données central des données pertinentes pour prédire une vitesse de déplacement pour la première clé d'identification jusqu'à l'arrivée de la première clé d'identification au niveau du premier véhicule automobile, dans lequel
- le dispositif de traitement de données central, ou
- le dispositif de commande du premier véhicule automobile
détermine un moment de l'activation d'au moins un composant du véhicule automobile en fonction de la vitesse de déplacement prédite.

13. Réseau comprenant une pluralité d'unités d'émission-réception à courte portée, d'unités d'émission-réception à champ lointain, ainsi qu'un dispositif de traitement de données central, qui sont adaptés pour mettre en œuvre des étapes respectives d'un procédé selon l'une quelconque des revendications 1 à 12.

14. Programme informatique, lequel peut être chargé directement dans une mémoire d'un dispositif de commande d'une unité d'émission-réception à courte portée, d'une unité d'émission-réception à champ lointain ou d'un dispositif de traitement de données central, avec des moyens de programme pour exécuter des étapes respectives du procédé selon l'une quelconque des revendications 1 à 12, lorsque le programme est exécuté dans le dispositif de commande respectif.
